# EUROPEAN PATENT APPLICATION

(11) **EP 2 506 158 A1**
(43) Date of publication of application: **03.10.2012**
(21) Application number: 10832627.3
(22) Date of filing: 10.11.2010
(51) Int. Cl.: G06F 17/30

(54) **CROSS-REGION ACCESS METHOD FOR EMBEDDED FILE SYSTEM**

(30) Priority: 25.11.2009 CN 200910109871
(71) Applicant: Huizhou Tcl Mobile Communication Co., Ltd., Huizhou, Guangdong 516006 (CN)
(72) Inventor: HAN, Biao, Guangdong 518067 (CN); XIE, Zhuolun, Guangdong 518067 (CN)
(74) Representative: Petraz, Gilberto Luigi
(86) International application number: PCT/CN2010/078606
(87) International publication number: WO 2011/063720

(57) **Abstract**

The invention provides a cross-region access method for an embedded file system, which includes the following steps: step a, defining a critical resource region in a BANK which is shared by program codes and an EFS for the program codes and the EFS to be stored therein; step b, judging the type of an operation instruction, if it is a reading or writing operation instruction, utilizing the critical resource region to carry out a time-division asynchronous operation to a FLASH, if it is a data erasing operation instruction, putting the data erasing operation instruction into a real-time operation system for management on condition that normal operations of other application programs are not affected. The cross-region access method for an embedded file system provided by the invention introduces a new distribution mechanism for EFS space and performs time-division asynchronous operation by defining the critical resource protection region and a task machine; it avoids considering the limit of the bank boundary of the storage to the EFS space partition, utilizes the idle space of the storage sufficiently, improves utilization ratio of the FLASH space and reduces the cost.

## Description

### TECHNICAL FIELD OF THE INVENTION

The present invention involves an embedded file system, more particularly, to a cross-region access method for an embedded file system.

### BACKGROUND OF THE INVENTION

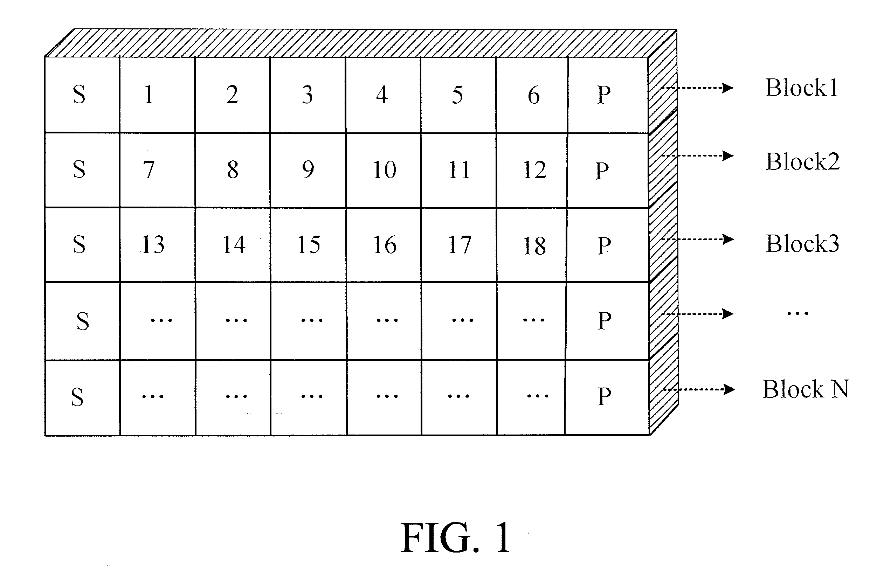

As shown in FIG. 1, an embedded file system (EFS) being widely used in mobile devices, mainly consists of three portions: Super Block, Page Table, and Data Storage Region, amongst, the Super Block stores a page table activation message, the Page Table stores a mapping message for a page table to a physical address or a mapping message for a physical address to a page boundary, and the Data Storage Region is used to store a user data message. Blocks of the Data Storage Region (e.g. a FLASH memory) are divided as an EFS page table structure shown in FIG. 1.

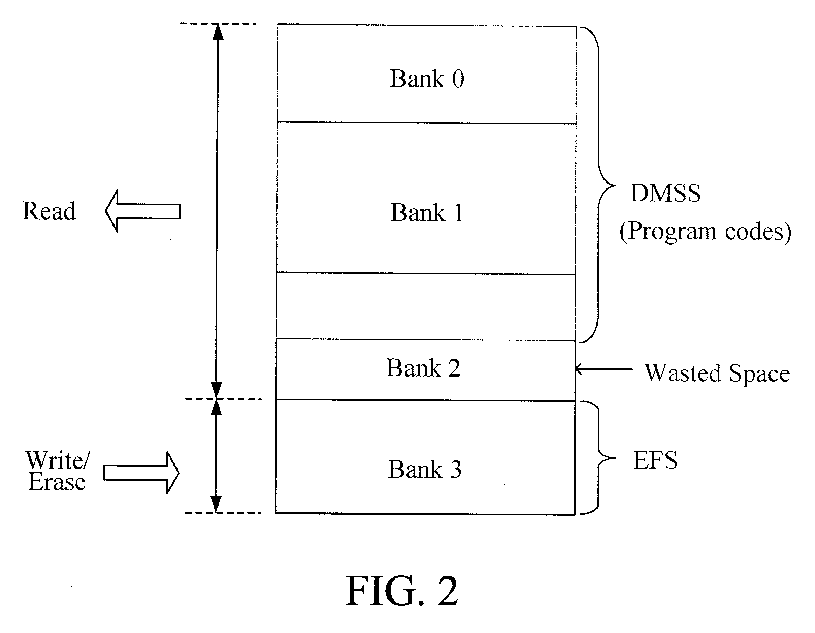

As shown in FIG. 2, an assumption that the FLASH has 4 BANKs, according to an EFS technology protocol, space allocation cannot fall in a boundary of the Banks, therefore, it is only possible to allocate a whole space of Bank3 to an EFS (only for executing data writing and data erasing operations), a program code (DMSS, distributed mass storage system) space occupies Bank0, Bank 1, and a first half of Bank 2 (only for executing a data reading operation), however, the space of a latter half of Bank 2 will be wasted. On condition that the capacity of the FLASH is constant, some greater applications cannot be loaded to the mobile device to operate due to the limitation of the EFS space not being expandable. This may even lead to the mobile device failing to start up. As can be seen, a size distribution mechanism of an EFS in such manner can cause a portion of the FLASH space to idle and be wasted.

### SUMMARY OF THE INVENTION

An objective of the present invention is to provide a cross-region access method for an embedded file system (EFS), which is conducted to solve the technical drawbacks that the EFS distribution mechanism existing in prior art results a waste of a data memory space.

In order to achieve the above objective, the cross-region access method for the embedded file system comprises the following steps:

Step a, defining a critical resource region in a BANK, which is shared by program codes and the EFS for the program codes and the EFS to be stored therein;

Step b, determining a type of an operation instruction, if it is a reading or writing operation instruction, then performing a time-division asynchronous operation on a FLASH by using the critical resource region, and if it is a data erase operation instruction, then putting the data erasing operation instruction into a real-time operation system to manage while in a condition which does not affect normal executions of other application programs.

More particularly, the time-division asynchronous operation of Step b comprises the following steps specifically:

determining whether the critical resource region is occupied if the operation instruction is a data read operation instruction or a data writing operation instruction, if occupied, then suspending a current operation, utilizing a polling mechanism to determine again after delaying a period of protection time until the critical resource region is no longer occupied, and then executing the corresponding data reading or data writing operation instruction.

More particularly, putting the data erasing operation instruction to the real-time operation system to manage in Step b comprises the following steps specifically:

if the operation instruction is a data erasing operation instruction, then putting the current operation into a system Task managing queue so that, entering into a wait-for-execution state; after execution or time slices for other Tasks with higher priorities are finished, the operation system entering it into a ready-for-execution state; if a CPU resource is in idle, then determining whether there is any other operation occupying the FLASH critical resource; if not, then fetching the instruction to execute an erasing operation to the FLASH; if so, abandoning this operation and transferring a task control right to the operation system, the operation system changing a current operation state to the wait-for-execution state, and repeating the above processes after the operation resource is obtained again.

The cross-region access method for the embedded file system provided by the present invention introduces a new EFS space distribution mechanism for performing the time-division asynchronous operations by defining the critical resource protection region and a task machine. The restriction of a BANK boundary of the memory to the EFS space division is not required to be considered. The idle space of the memory can be sufficiently utilized, and the utilization efficiency of the FLASH space is increased as well the cost is reduced.

### BRIEF DESCRIPTION OF THE DRAWINGS

FIG. 1 is a schematic diagram of an EFS page table of a currently existing data storage region;

FIG. 2 is a schematic diagram showing a currently existing distribution of EFS storage regions;

FIG. 3 is a schematic diagram showing a distribution of EFS storage regions in accordance with the present invention;

FIG. 4 is a flow chart of a cross-region access method for an embedded file system in accordance with present invention;

FIG. 5 is a schematic diagram showing managing a data erasing operation in accordance with the present invention.

### DETAILED DESCRIPTION OF THE INVENTION

For a better understanding of the aforementioned content of the present invention, embodiments are illustrated in accordance with the attached figures for further explanation. The embodiments are described for explaining rather than limiting the present invention.

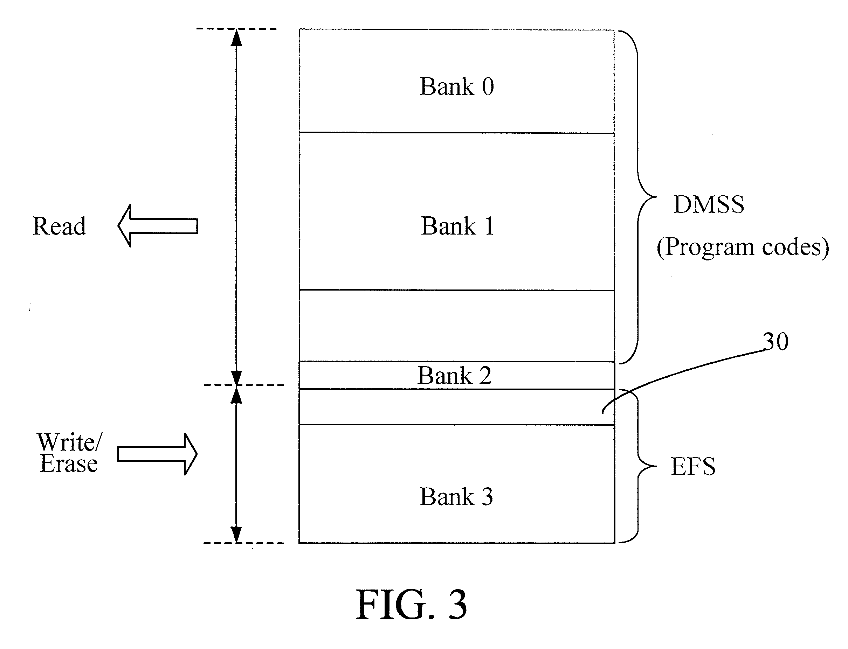

With reference to FIG. 3, a cross-region access method for an embedded file system (EFS) of a preferred embodiment in accordance with the present invention utilizes an NSRW (non-synchronous read and write) technology to expand distribution to an EFS space in a FLASH data storage region (e.g. an NOR FLASH). A critical resource region 30, which is near the Bank3 (i.e. an EFS storage region), is defined in the Bank2 which is described in the prior art, that is, the critical resource region is defined in the BANK which is shared by the program codes and the EFS for the program codes and EFS to be stored therein, so that the storage region for EFS is extended into the Bank2, thereby an idle space of the FLASH is sufficiently utilized and a cross-Banks access of EFS is realized.

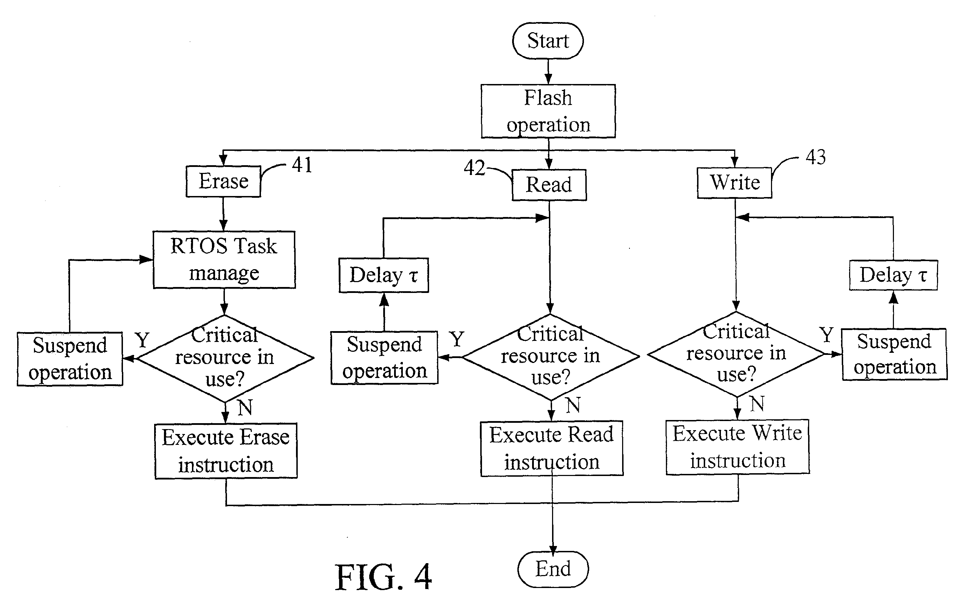

In conjunction with reference to FIG. 4, due to physical characteristics of the FLASH, reading and writing operations to the FLASH cannot be executed simultaneously in the same Bank. For permitting the program codes and the EFS to share the same Bank (i.e. Bank2 in the drawing) without influencing the operation of the FLASH, the critical resource region 30 is defined in the BANK which is shared by the program codes and the EFS for the program codes and the EFS to be stored therein, and the critical resource region operates in a manner of time-division asynchronization, the operation flow is as follows:

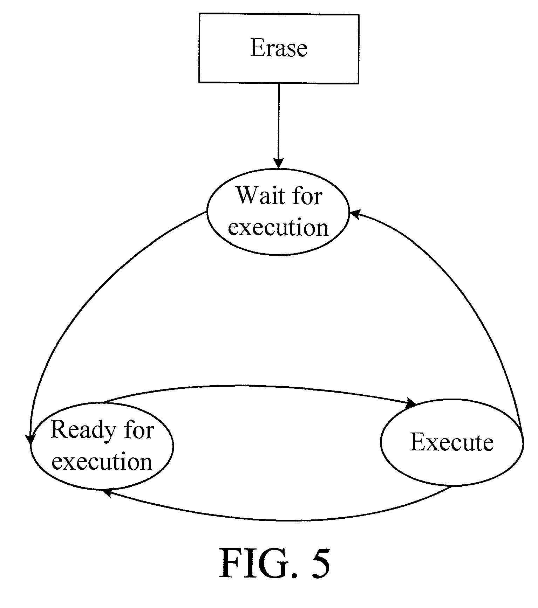

A type of a FLASH operation instruction is determined. If it is a data reading operation instruction in step 42 or a data writing operation instruction in step 43, then it is determined whether a critical resource in the critical resource region 30 is occupied. If it is occupied, a current operation is suspended, a polling mechanism is utilized and a determination is made again after a period of protection time τ until the critical resource region is no longer occupied, then a corresponding data reading or data writing instruction is executed. If the type of the FLASH operation instruction is a data erasing operation instruction in step 41, the data erasing operation instruction is put in an RTOS (real-time operation system) to execute Task management to avoid affecting normal operations of other application programs. The management scheme is particularly illustrated in FIG. 5: if the operation instruction is the data erasing operation instruction, then the current operation is put in a system Task management queue, the current operation is entered a wait-for-execution state. After execution or time slices for other Tasks with higher priorities are finished, the operation system enters the current operation into a ready-for-execution state. If a CPU resource is in idle, it is determined whether there is any other operation occupying the critical resource of the FLASH. If not, the instruction is fetched to execute an erasing operation to the FLASH. If so, this operation is abandoned, and a task control right is transferred to the operation system. The operation system changes the current operation state to the wait-for-execution state. After operation resources (CPU, internal storage and Task control right) are obtained again, the Task management process described above is repeatedly executed.

By means of the time-division asynchronous operation process described above, the critical resource region 30 adjacent to a boundary of the EFS can be sufficiently utilized, and therefore the cross-region access for the EFS is realized.

The above are only preferred embodiments of the present invention, which are not described for limiting the present invention, it is noted that various modifications, alterations and improvements made by persons skilled in this art within the spirits and principles of the present invention should also be deemed to be embraced in the protection scope of claims of the present invention.

## Claims

1. A cross-region access method for an embedded file system (EFS), **characterized in that** the method comprises steps of:
step a, defining a critical resource region in a BANK, which is shared by program codes and the EFS for the program codes and the EFS to be stored therein;
step b, determining a type of an operation instruction, if it is a reading or writing operation instruction, then executing a time-division asynchronous operation to a FLASH by using the critical resource region, and if it is a data erasing instruction, putting the data erasing operation instruction into a real-time operation system to manage while in a condition unaffecting normal operations of other application programs.

2. The cross-region access method for the embedded file system (EFS) as claimed in claim 1, **characterized in that** the time-division asynchronous operation in step b particularly comprises steps of:
if the operation instruction is a data read operation instruction or a data write operation instruction, then determining whether the critical resource region is occupied, if occupied, then suspending a current operation, utilizing a polling mechanism to determine again after a delay of a period of protection time until the critical resource region is no longer occupied, and then executing the corresponding data reading or data writing instruction.

3. The cross-region access method for the embedded file system (EFS) as claimed in claim l, **characterized in that** putting the data erasing operation instruction into the real-time operation system in step b particularly comprises steps of:
if the operation instruction is the data erasing operation instruction, then putting a current operation into a system Task management queue, entering into a wait-for-execution state, after execution or time slices for other Tasks with higher priorities are finished, the operation system entering it into a ready-for-execution state, if a CPU resource is in idle, then determining whether a critical resource of the FLASH is occupied by another operation, if not, fetching the instruction to execute an erasing operation to the FLASH, if so, abandoning this operation and transferring a task control right to the operation system, the operation system changing a current operation state to the wait-for-execution state, and repeating the above process after the operation resource is obtained again.
